# EUROPEAN PATENT APPLICATION

(11) **EP 1 806 169 A1**
(43) Date of publication of application: **11.07.2007**
(21) Application number: 06075048.6
(22) Date of filing: 10.01.2006
(51) Int. Cl.: B01D 46/44, B01D 53/04, G01N 15/08

(54) **System and method for measuring filter saturation**

(71) Applicant: Consultatie Implementatie Technisch Beheer B.V., 7201 JB Zutphen (NL)
(72) Inventor: Bos, Albert, 6971 AN Brummen (NL); Oord, Hendrik, 7207 GD Zutphen (NL)
(74) Representative: Winckels, Johannes Hubertus F.

(57) **Abstract**

The invention relates to a system for measuring the saturation level of a filter. The invention further relates to an assembly of such a system and at least one filter. The invention furthermore relates to a method for measuring the saturation level of a filter by means of such a system.

## Description

The invention relates to a system for measuring the saturation level of a filter. The invention further relates to an assembly of such a system and at least one filter. The invention furthermore relates to a method for measuring the saturation level of a filter by means of such a system.

In numerous situations, it is desirable that it can be detected whether an essential gas filter is saturated or not, thereby allowing timely replacement of this gas filter. The reason is that saturation of the gas filter normally results in malfunction of the gas filter, that is, the gas filter no longer functions properly. Filter malfunction resulting from saturation can entail (serious) adverse consequences. For instance, warships are typically equipped with one or more protection filters to resist a chemical and/or biological attack. By means of the protection filter, air drawn in from the outside atmosphere can be purified of noxious components before being passed into the ship. However, in case of saturation of the protection filter, the air drawn in will not be purified of noxious components, so that these noxious components will end up in the warship, which can entail serious health risks. To eliminate these risks, early detection of saturation of a protection filter is of particularly great importance.

Directly coupling an analytic device, such as e.g. a gas chromatograph, to the protection filter normally does not provide an adequate solution for early detection of filter saturation, since such a device has not been calibrated at the (varying) physical and chemical conditions of the air flow at the time of filter saturation, which is disadvantageous to the measuring sensitivity, as a result of which filter saturation can be observed only with (undesirable) delay. Moreover, analytical measurement of noxious components in the air flow coming from the filter does not provide an early warning system for an upcoming filter saturation.

The object of the invention is to provide an improved measuring system, which enables quicker detection of filter saturation.

It is a further object of the invention to provide an improved measuring system, which enables determination of the level of filter saturation To that end, the invention provides a system for detecting saturation of a main filter for substantially removing at least one component from a gas flow, said system comprising:
- a parallel filter, said parallel filter being arranged for removal of the same component from said gas flow as the main filter and having a filter capacity or filter volume that is a fraction of the filter capacity or filter volume of the main filter;
- a dividing means for dividing said gas flow into at least a main flow and a sub flow, wherein said main flow is fed into said main filter and said sub flow is fed into said parallel filter, wherein the volume ratio between said main flow and said sub flow is substantially equal to the filter capacity ratio and/or filter volume ratio between said main filter and said parallel filter, and
- detection means operatively associated with the flow coming from the main filter and/or discharge side of said parallel filter and with the flow through said parallel filter in at least one intermediate position between the proximal and distal end of said parallel filter as seen in the direction of the gas flow, for measuring the concentration of the component in said flows and detecting a difference in said concentrations.

The dividing means may be formed by arranging that the gas flow is separated into a main flow and a sub flow by means of a splitter, a fork or branching in the conduit or passageway through which the gas flow passes towards the main filter, so that a minor portion of the gas that flows towards the main filter is directed into a secondary passageway so as to form a sub flow which is fed into the parallel filter. Alternatively, the dividing means may physically separate the main flow feed from the sub flow feed, such that, for instance, both main and sub flow are sampled from the same gas source but use separate feeds or intake openings for taking in the gas.

The parallel flow may be very small in comparison to the main flow, and a small pump may for instance be used to extract a small sub flow from the inlet of the main stream.

The discharge or exhaust of the parallel flow may be rejoined with the main flow (i.e. on the input side of the main filter). This has the advantage that the integrity of the filter system as a whole, and thus the protection level, is not impaired by the parallel flow itself, since the parallel filtering process occurs upstream of the main filter. Alternatively, the discharge or exhaust of the parallel flow may be used as a relative reference (zero point). Of course, this will only provide a proper zero reference in case that the parallel filter (and thus also the main filter is not completely saturated.

It is a further advantage of the system of the present invention that it also allows for the detection of desorption of the filtered compound from the main filter, which may for instance occur when a very clean gas is passed through the main filter. In such instances, the position in the parallel filter at which the concentration of the compound equals the zero reference value will move towards the proximal end of the parallel filter.

It is still a further advantage of the system of the present invention that it may be fully supplementary to a main filtering system and may for instance be installed in addition to or supplementary to an already existing gas filtering system.

It is thus an advantage of the system of the present invention that the characteristics and specifications of the main filter do not have to be altered. For instance the information on the level of saturation of the main filter could in principle be obtained by placing sensors in the main filter system. That would however complicate the manufacturing and certification of the main filter and could possibly interfere with the filtering properties. By providing a parallel filter as defined herein with a system for detecting saturation and/or measuring the level of saturation of said parallel filter, the main filter can be used in essentially unaltered form. The parallel filter may comprise detection means operatively associated with the flow going through said parallel filter in at least two separate positions along an axis between the proximal and distal end of said parallel filter as seen in the direction of the gas flow, and which detection means are adapted for measuring the concentration of the component in said flow in said at least two separate positions and wherein said system comprises means for detecting a difference in said at least two concentrations.

The above assembly may thus have the form of one "long" parallel filter having for instance embedded sensors and/or semi permeable membranes along the length of the filter which allow diffusion of the compound towards externally placed sensors that are capable of detecting the compound in the gas composition at certain positions in the parallel filter. For instance a long tube may be packed with filter material and may have small diffusion holes along the length. The sensors may for instance be placed, preferably air-tight, against the tubing using membranes and o-rings.

In a preferred embodiment, the parallel filter comprises an array of at least two in-line filters, wherein the sub flow is fed into the first filter of the array of in-line filters, and wherein the referred intermediate position in the parallel filter is at least one position between the first and last filter of said array of in-line filters.

Preferably, such a position is the outflow of one or more of the in-line filters, under the proviso that when the position is the outflow of the last filter, the detection means are also operatively associated with the flow coming from at least one other filter of the array of in-line filters. Thus, it is essential that at least an intermediate position before the end of the parallel filter is sampled in order to detect progressive saturation and/or measure the saturation level of the main filter.

In stead of using an outflow, one may use a semi-permeable (diffusion) membrane, for instance in the side of the filter housing as a part of the detection means, through which membrane the component(s) from a gas flow may diffuse and be detected. The skilled person will understand that this accounts for all sampling positions associated with the filters.

The array of contiguous in-line filters may consist of any number of filters above and including two, for instance 5-10, and even more filters may together form the in-line filter array. The term in-line is used herein to indicate that the outlet of a proximal filter is connected to, and allows gas flow communication with, the inlet of an adjacent, more distal filter. Although the filter capacity or filter volume of each filter in the array of in-line filters may differ, the array as-a-whole has a filter volume or filter capacity whose value in relation to that of the main filter will determine the air flow through the filter array. In a preferred embodiment, however, the filter capacity or filter volume of each individual filter in the array is substantially equal.

In a preferred embodiment, said detection means are operatively associated with the flow coming from each individual filter of said array of in-line filters and are capable of measuring the concentration of the component in the flow coming from each of the individual filters of said array of in-line filters.

By taking the flow filtered by main filter and/or from the discharge side of said parallel filter as a relative reference (zero point) in case of detection of a concentration of the component in the flow coming from an intermediate position in the parallel filter, instantaneously, at least relatively quickly, and with high sensitivity, traces of the component can be detected in the gas flow captured in a proximal position of the parallel filter, which is indicative of partial filter saturation. If traces of the component can be detected at more distal positions in the parallel filter, this is indicative of higher-level filter saturation. The relative references can only be regarded as a reference for the duration of the then prevailing current conditions and physical properties of the partial flows. Upon any change of conditions, for instance during a pressure change, the relative reference will be adjusted correspondingly. The flow serving as a relative reference then has the same physical composition regarding, in particular, pressure, temperature, and possibly moisture content, as the physical composition of the flow coming from an intermediate position in the parallel filter serving as a sample, so that the presence of a minimal amount of the component to be actually removed by the filter can be observed real-time and truly.

The observable concentration of the component depends on the nature of the component. Normally, in the case of inorganic compounds, such as H₂S and NH₃, concentrations from about 20 ppb can be observed relatively fast and readily by means of the system according to the invention; in the case of organic compounds, in particular hydrocarbons, concentrations can be observed from 50 ppb to from 1 ppm, depending on the nature of the organic compound.

The parallel filter is adapted to the main filter in that the parallel filter is arranged for removing from the gas flow the same component or group of components as the component or group of components that can be removed by the main filter. Already at relatively low flow rates of the gas flow of upwards of about 1 ml/minute, saturation of the filter can be established (depending on the capacity/flow factor with the main filter).

It will be clear that not the complete gas flow exiting from any of the filter needs to be used for detection of possible saturation of the filter. Normally, only a fraction of the exiting gas flow will be captured and be analyzed by means of the system according to the invention.

The gas flow can suitably be captured at an intermediate position in the parallel filter, i.e. at a point upflow from the regular discharge side of the filter, in order to establish the saturation level of the parallel filter, and thereby estimate the saturation level of the main filter. However, since the dimensioning of filters is normally standardized, and hence is little flexible, the gas flow will normally be captured on a regular discharge side of the first and/or an intermediate filter in the parallel in-line filter array. With the system according to the invention, saturation of a filter can thus be detected and quantified relatively simply, early and reliably.

Each of the gas flows in aspects of the present invention can be divided into a multiplicity of partial flows or main flows and sub flows. However, in order to keep the system relatively simple in construction, the dividing means are preferably arranged for dividing the gas flow into two partial flows. One of the partial flows is then passed through the main filter, thereby allowing the necessary reference data to be collected, while another partial flow is passed to the inlet of the parallel filter. Still another partial flow may be passed directly to the detection means, thereby allowing determination of a possible presence of a component to be filtered.

The filters used in aspects of the present invention may consist of absorption filters, such as carbon filters. However, for certain applications, and when filtering floating microparticles (aerosol) from the partial flow, it is also conceivable that filters of a different kind are used, such as, for instance, a 'High Efficiency Particulate Air' filter (HEPA filter).

The detection means can be highly diverse in nature, depending on the component to be detected. Preferably, however, the detection means comprise at least one sensor. The sensor is then arranged in particular for detecting with a relatively high sensitivity a component or group of components to be removed by the filter and post-filter.

In order for the situational conditions to vary as little as possible, thus enabling optimization of the sensitivity of the system so that instantaneous detection of filter saturation and accurate measurement of saturation level can be realized, the partial flows are preferably passed in turn along the same sensor or set of sensors. To that end, the system preferably comprises switching means for passing the partial flows in succession to the detection means.

The switching means can then be provided with a control valve which may or may not be manually controllable. However, by preference, the switching means are electronically operable, whereby the switching means can be periodically switched upon lapse of a specific period of time, preferably after 10 to 15 seconds, so as to enable another partial flow to be passed through the detection means.

In another particular preferred embodiment, the detection means comprise several sensors, the sensors being positioned such that each partial flow is provided with at least one separate sensor. Several partial flows can then be passed simultaneously along (separate) sensors or sets of sensors, which normally makes the use of switching means redundant. Moreover, the sensors can then be adjusted to the nature of the component(s) to be detected, so as to enable optimization of the analytic power of the system according to the invention.

Preferably, in case the sensor is a metal-oxide sensor or a catalytic combustion sensor, the sensor is arranged for detecting the concentration of the component at a temperature higher than 100 °C. At an elevated temperature, a difference in thermal and/or electrical conductivity can normally be sensed better in the sensor. Also, at an elevated temperature, atoms can be excited in a facilitated manner, after which a relapse into the stable condition will generate electromagnetic radiation of a specific observable wavelength.

With for example infra-red of UV optical sensors the temperature is not critical.

Each sensor is preferably formed by one (or an assembly of two or more) of the following sensors: an optical cell (optical sensor), and a metal oxide semiconductor (MOS) or a catalytic combustion sensor (pellistor). The optical cell is then normally provided with a coating sensitive to the component to be detected. When this coating comes into contact with the component, this will influence the amount of light, such as, for instance, infrared or ultraviolet light, in the sensor, which is observable. Also a light absorption cell is possible (IR and UV, or any light in case of particles [light scattering technique, laser diffraction])The metal oxide semiconductor will exhibit semiconductor properties in particular at elevated temperature, while the conductivity of the metal oxide depends on the activity of the oxidation reaction (combustion) of the component to be detected in the sensor, this activity depending on the one hand on the temperature in the sensor and on the other on the concentration of the component to be detected in the partial flow.

Normally, the amount of oxygen needed for the oxidation reaction will be present in excess. However, it is conceivable that an additional, predefined amount of oxygen is supplied to the partial flow before it is passed through the sensor, to enable complete combustion of the component to be detected.

In an alternative preferred embodiment, the detection means are arranged for detecting the concentration of the component on the basis of at least one of the following known techniques: photo ionization detection (PID), flame ionization detection (FID), flame photometric detection (FPD), electron capture detection, thermal conductivity detection (TCD), thermionic detection (TID), and gas chromatography. Since the above detection techniques are known to those skilled in the art, these techniques will not be explained separately.

To enable a comparison of the data collected during detection, the system preferably comprises a processing unit for comparing the detected concentrations of the component in the different partial flows. More preferably, the processing unit, typically also referred to as processor, is further arranged for driving different component parts of the system, such as, for instance, control valves which may or may not be electronically controllable. In that case, the system, being provided with a processing unit designed as a driving unit, can function completely autonomously, allowing a comparison between the measured concentrations in the different partial flows to be performed independently.

Normally, the processing unit will be coupled to a database in which data collected in the past are stored for pattern recognition of the detection means. During detection of the partial flows, the observed detection patterns can be compared with previously stored patterns, so that the observed detection patterns can be mutually compared relatively reliably, leading to relatively early determination of any saturation of the filter.

To enable a warning to be delivered when saturation of the filter is being established, the system is preferably provided with signal generating means for generating an audio and/or visual signal. It is also conceivable, however, that the system comprises transmitting means for communicating collected data to remotely positioned receiving means. In this way, it can be observed remotely when a situation of filter saturation occurs, which is advantageous in particular to warn emergency services as soon as possible after filter saturation has been established, whereupon the saturated filter can be replaced and/or measures of a different nature can be taken.

The invention further relates to an assembly of such a system according to the invention and at least one filter.

The filter can be highly diverse in nature, but is preferably formed by one of the following filters: a protection filter, and an industrially applicable filter. In addition to use of the system as a warning system alerting when a protection filter in, for instance, warships has reached saturation, it is also conceivable that the system is used as a monitoring system in industrial processes where filters are required. For instance when air coming from compressed air is used in an industrial process, normally the compressed air must first be purified (e.g. of oil residues) by means of a filter before the air can be used in particular process streams. In such situations too, it is highly important that saturation of the filter can be observed as soon as possible so as to prevent contaminations in the process stream.

The invention further relates to a method for detecting saturation of a main filter by using a system as described above, comprising the steps of:
a) capturing at least a part of a gas flow exiting from the main filter and/or from the discharge side of said parallel filter,
b) capturing at least a part of a gas flow through said parallel filter from at least one intermediate position between the proximal and distal end of said parallel filter as seen in the direction of the gas flow,
c) detecting the concentration of at least one specific component in the flow coming from the main filter,
d) detecting the concentration of the component in the gas flow through said parallel filter at said at least one intermediate position, and
e) detecting a concentration difference observed in steps c) and d).

Observing a concentration difference during step e) is indicative of saturation of the (main) filter, whereupon the main filter should be replaced and/or cleaned.

The invention further relates to a method for (quantitatively) measuring the level of saturation of a main filter by using a system as described above, comprising the steps of:
a) capturing at least a part of a gas flow exiting from the main filter and/or from the discharge side of said parallel filter,
b) capturing at least a part of a gas flow through said parallel filter from at least one intermediate position between the proximal and distal end of said parallel filter as seen in the direction of the gas flow,
c) detecting the concentration of at least one specific component in the flow coming from the main filter,
d) detecting the concentration of the component in the gas flow through said parallel filter at said intermediate position;
e) detecting or measuring the concentration difference observed in steps c) and d), and
f) calculating the level of saturation of said main filter from the concentration difference and the position of the parallel filter at which the concentration of the component was measured.

By using, for example, a parallel filter array consisting of 5 filters in-line filters, detection of a concentration difference between the concentration of the compound in the outflow from the main filter and in the outflow of filter 1, but not in the outflow of filter 2, is indicative of a 20% saturation of the main filter. The level of saturation may be determined more accurately by increasing the number of filters in the parallel filter array. It will be understood that the same may be performed when using a single parallel filter, but that the measurement should be performed at some measurable intermediate position between the front and back of the filter in order to calculate the level of saturation of the main filter.

The calculation of the level of saturation of the main filter has become possible due to selecting the filter capacity or filter volume of the parallel filter or parallel filter array as a defined fraction of that of the main filter, and adjusting the volume of the sub flow relative to the volume of the main flow of the gas such that the flow through the parallel filter is proportional to its filter capacity or filter volume.

The quotient of filter capacity (e.g. grams of substance that can be adsorbed before saturation of the filter occurs and expressed as grams of gas "x" per volume or weight of filter material "y") and flow is preferably equal for both main and parallel filter. If the capacity of the parallel filter is 1/1000th of the main filter, then the flow through the parallel filter must be 1/1000^{th} also in order to achieve the same degree of saturation over time. When using the same filter material, the volume/weight of the filter material can be taken instead of the capacity, as the capacity will have a linear relationship with the volume/weight of material.

When the parallel flow is much smaller than the main flow, a practical method is to use a diaphragm pump (e.g. similar to aquarium air pump) and directly take the air from the inlet of the main filter (which has a known flow, such as for example 600 m³/hr) pump this through the parallel filter and discharge the outlet of the parallel filter in front of the main filter again. The latter preferably does not compromise the protection of the main filter.

By increasing the precision of the various flow rates, the calculation of the level of saturation of the main filter can be increased.

In the methods of the present invention, step c) and step d) are preferably performed simultaneously. In that case, however, use must be made of separate sensors. In case use is made of a collective sensor or set of sensors, step c) and step d) are preferably performed in succession. The successive detection of the concentration of the component in the different partial flows can be realized by the use of switching means, such as, for instance, a control valve, which may or may not be electronically operable.

In preferred embodiments of the methods of the present invention, detecting the concentration of the component in the flows according to step c) and step d) is done at a temperature above 100 °C. Normally, at an elevated temperature, the concentration of the component can be observed relatively quickly, accurately and reliably. In a particular preferred embodiment, detecting the concentration of the component in the flows according to step c) and step d) is done at increasing temperatures from substantially 100 °C to substantially 600 °C, preferably from substantially 150 °C to substantially 550 °C. The increase of this temperature proceeds within a particular time frame, for instance 10 seconds. Since the detection of the nature of the component is normally temperature-dependent, it is advantageous to measure over a particular temperature range in order to make the analytic picture of the components contained in the partial flow as complete as possible.

The invention will now be clarified on the basis of non-limiting exemplary embodiments represented in the appended drawing. In the drawing:
Fig. 1 is a diagrammatic representation of an assembly of a system according to the invention and a filter, and
Fig. 2 is a diagrammatic representation of an alternative assembly of a system according to the invention and a filter.

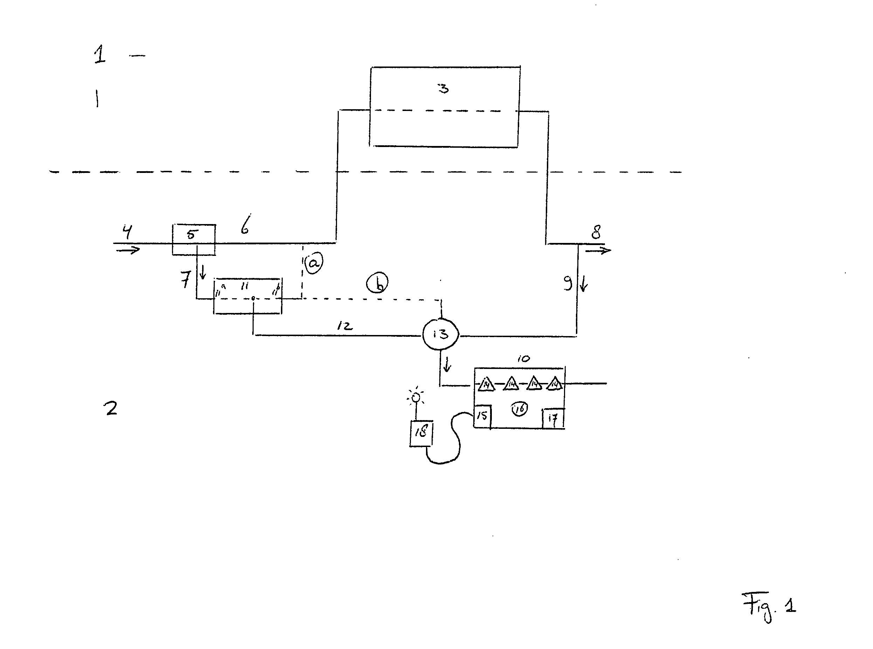

Fig. 1 shows a diagrammatic representation of an assembly 1 of a system 2 according to the invention and a main filter 3. The main filter 3 can for instance be formed by a protection filter and/or industrial filter. The system 2 is arranged for detecting and/or quantifying saturation of the main filter 3 and hence malfunction of the main filter 3. Normally, a gas flow 4 will be passed through the main filter 3. Before the gas flow 4 enters the main filter 3, it is passed to a dividing unit 5, where the gas flow 4 is divided into a main flow 6, and a sub flow 7. Main flow 6 is passed through the main filter 3, where a component or group of components is removed. A clean gas flow 8 exits main filter 3 to serve as a clean supply of gas and a gas fraction 9 is captured by conventional means (not shown). The gas fraction 9 is passed to a detection unit 10 to provide a reference value (zero point). Sub flow 7 is passed through a parallel filter 11 and a gas fraction 12 is captured by conventional means (not shown) at an intermediate position between the proximal end (11a) and distal end (11b) of the parallel filter (11). The gas filtered through the parallel filter may be either rejoined (a) with the main gas flow 6, or may be used (b) to provide an alternative reference value (zero point). Both the gas fraction 9 and the gas fraction 12 are passed to an electronic switch 13. In succession, the two gas fractions 9 and 12 are furthermore passed to a detection unit 10, in order to observe any critical difference in concentration of the above-mentioned component or group of components between the two gas fractions 9 and 12. The detection unit 10 in this exemplary embodiment comprises four metal oxide sensors 14, along which the gas fractions 9 and 12 are passed in alternation. During analysis of each gas fractions 9 and 12 by the sensors 14, the sensors are heated from about 150 °C to about 550 °C, in order to observe as many components as possible in a reliable manner. Since the situational conditions, in particular regarding physical parameters, such as pressure and temperature, of gas fraction 9 serving as a reference and gas fraction 12 serving as a sample are identical, relatively low concentrations of less than 1 ppm can be measured relatively quickly and reliably with a relatively high sensitivity. The detection unit 10 further comprises a processing unit 15, a database 16, and a supply 17, thereby allowing saturation of the main filter 3 to be established and/or quantified fully autonomously. When saturation of the main filter 3 has been established and/or quantified to reach a certain level, a signal can be transmitted via a transmitter 18, for instance to a maintenance service, whereupon the main filter 3 can be cleaned and/or replaced.

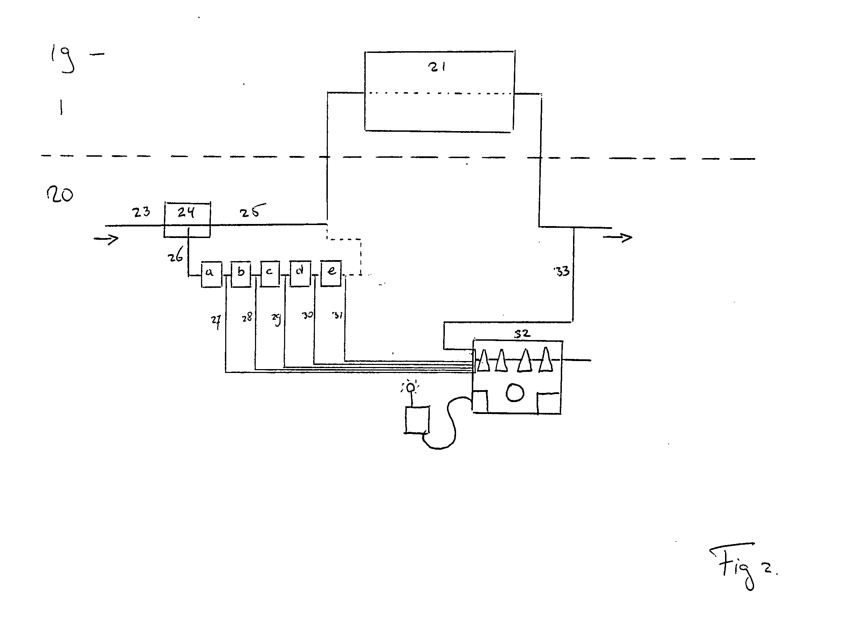

Fig. 2 shows a diagrammatic representation of an alternative assembly 19 of a system 20 according to the invention and main filter 21. A gas flow 23 to be passed through the main filter 21, is passed to a dividing unit 24, where the gas flow 23 is divided into a main flow 25, and a sub flow 26. Main flow 25 commences as described in Figure 1. Sub flow 26 is passed through a series of 5 aligned filters (a-e). Gas fractions 27, 28, 29, 30 and 31 are captured and all are passed to a detection station 32 (same configuration as detection unit 10 of Fig. 1, except for having multiple gas inputs), where the gas fractions can be subjected to component (group)-specific analysis. The detected data can subsequently be compared with the data obtained from the reference gas fractions 31 or 33. When gas fractions 27 and 28 have a higher concentration of component(s) than any of the reference value(s) (e.g. gas fraction 31 or a gas fraction 33 from the gas flow filtered through the main filter), it can be established that the main filter has a saturation level of at least 40%.

It will be clear that the invention is not limited to the exemplary embodiments represented and described here, but that within the framework of the appended claims, numerous variants are possible that will be obvious to those skilled in this field of the art.

## Claims

1. A system for detecting saturation of a main filter for substantially removing at least one component from a gas flow, said system comprising:
- a parallel filter, said parallel filter being arranged for removal of the same component from said gas flow as the main filter and having a filter capacity or filter volume that is a fraction of the filter capacity or filter volume of the main filter;
- a dividing means for dividing said gas flow into at least a main flow and a sub flow, wherein said main flow is fed into said main filter and said sub flow is fed into said parallel filter, wherein the volume ratio between said main flow and said sub flow is substantially equal to the filter capacity ratio and/or filter volume ratio between said main filter and said parallel filter, and
- detection means operatively associated with the flow coming from the main filter and/or from the discharge side of said parallel filter and with the flow through said parallel filter in at least one intermediate position between the proximal and distal end of said parallel filter as seen in the direction of the gas flow, for measuring the concentration of the component in said flows and detecting a difference in said concentrations.

2. System according to claim 1, wherein said parallel filter comprises an array of at least two in-line filters, wherein said sub flow is fed into the first filter of said array of in-line filters, and wherein said at least one intermediate position in said parallel filter is at least one position between the first and last filter of said array of in-line filters.

3. System according to claim 2, wherein said at least one intermediate position in said parallel filter is the outflow of at least one of said in-line filters, under the proviso that when said position is the outflow of the last filter, said detection means are also operatively associated with the flow coming from at least one other filter of said array of in-line filters.

4. System according to claim 2 or 3, wherein said array of in-line filters consists of from 2 to 10 filters.

5. System according to claim 2 or 3, wherein said array of in-line filters consists of 10 or more filters.

6. System according to any one of claims 2 to 5, wherein the detection means are operatively associated with the flow coming from each individual filter of said array of in-line filters.

7. System according to any one of claims 2 to 6, wherein the filter capacity or filter volume of each filter of said array of in-line filters is substantially equal.

8. A system according to any one of the preceding claims, **characterized in that** the filters are absorption filters.

9. A system according to any one of the preceding claims, **characterized in that** the detection means comprise at least one sensor.

10. A system according to claim 8, **characterized in that** the detection means comprise multiple sensors, the sensors being positioned such that at least a main flow and a sub flow are provided with at least one separate sensor.

11. A system according to claim 9 or 10, **characterized in that** the sensor is arranged for detecting the concentration of the component at a temperature higher than 100 °C (metal oxide or pellistor).

12. A system according to any one of claims 9-11, **characterized in that** each sensor is formed by one (or an assembly) of the following sensors: an optical cell, and a metal oxide semiconductor (MOS), pellistor (catalytic combustion sensor).

13. A system according to any one of the preceding claims, **characterized in that** the detection means are arranged for detecting the concentration of the component on the basis of at least one of the following techniques: photo ionization detection (PID), flame ionization detection (FID), flame photometric detection (FPD), electron capture detection, thermal conductivity detection (TCD), thermionic detection (TID), and gas chromatography.

14. A system according to any one of the preceding claims, **characterized in that** the system comprises a processing unit for comparing the detected concentrations of the component in the various flows.

15. A system according to any one of the preceding claims, **characterized in that** the system comprises transmitting means for communicating collected data to remotely positioned receiving means.

16. A system according to any one of the preceding claims, **characterized in that** the system comprises switching means for passing the various gas flows in succession to the detection means.

17. A system according to claim 16, **characterized in that** the switching means are electronically operable.

18. An assembly of a system according to any one of the preceding claims and at least one main filter.

19. An assembly according to claim 18, **characterized in that** the main filter is formed by one of the following filters: protection filter, and industrially applicable filter.

20. A method for detecting saturation of a main filter by means of a system according to any one of claims 1-17, comprising the steps of:
a) capturing at least a part of a gas flow exiting from the main filter and/or from the discharge side of said parallel filter,
b) capturing at least a part of a gas flow through said parallel filter from at least one intermediate position between the proximal and distal end of said parallel filter as seen in the direction of the gas flow,
c) detecting the concentration of at least one specific component in the flow coming from the main filter,
d) detecting the concentration of the component in the gas flow through said parallel filter at said at least one intermediate position, and
e) detecting a concentration difference observed in steps c) and d).

21. A method for measuring the level of saturation of a main filter by means of a system according to any one of claims 1-17, comprising the steps of:
a) capturing at least a part of a gas flow exiting from the main filter and/or from the discharge side of said parallel filter,
b) capturing at least a part of a gas flow through said parallel filter from at least one intermediate position between the proximal and distal end of said parallel filter as seen in the direction of the gas flow,
c) detecting the concentration of at least one specific component in the flow coming from the main filter,
d) detecting the concentration of the component in the gas flow through said parallel filter at said intermediate position;
e) measuring the concentration difference observed in steps c) and d), and
f) calculating the level of saturation of said main filter from the concentration difference and the position of the parallel filter at which the concentration of the component was measured.

22. A method according to claim 21, **characterized in that** step c) and step d) are performed simultaneously.

23. A method according to claim 21, **characterized in that** step c) and step d) are performed in succession.

24. A filter for substantially removing at least one component from a gas flow, said filter having an integrated system for detecting and/or measuring saturation of said filter, said system comprising detection means operatively associated with the flow going through said filter in at least two separate positions along an axis between the proximal and distal end of said filter as seen in the direction of the gas flow, and which detection means are adapted for measuring the concentration of the component in said flow in said at least two separate positions and wherein said system is comprises means for detecting a difference in said at least two concentrations.

25. Use of a filter as defined in claim 24 as a parallel filter in a system according to any one of claims 1-18.
